# EUROPEAN PATENT SPECIFICATION

(11) **EP 3 765 796 B1**
(45) Date of publication and mention of the grant of the patent: **16.09.2026**
(21) Application number: 19766735.5
(22) Date of filing: 12.03.2019
(51) Int. Cl.: F24D 15/02, F24D 15/04

(54) **MOBILE HEATING STATION**
MOBILE HEIZSTATION
CENTRALE DE CHAUFFAGE MOBILE

(30) Priority: 13.03.2018 NO 20180357
(43) Date of publication of application: 20.01.2021
(73) Proprietor: Romy Clima AS, 7514 Stjørdal (NO)
(72) Inventor: MYHRE, Roar, 7517 Hell (NO)
(74) Representative: Acapo Onsagers AS
(86) International application number: PCT/NO2019/050055
(87) International publication number: WO 2019/177465

(56) References cited:
- EP-A1- 2 672 190
- EP-A2- 0 240 441
- EP-A2- 2 597 379
- WO-A1-2013/026588

## Description

### Field of the invention

The present invention relates to a mobile heating station for heating and/or drying of buildings, comprising a container equipped with one or more heat pumps.

### Background to the invention

Building driers are used, as the name implies, for heating and drying of buildings, and buildings under construction in particular. These normally use diesel or gas/propane as the energy source for heating and drying, but electric building driers are also known.

### Description of prior art

NO20130573 A1 relates to a ventilation installation with a heat pump that gets energy from both the air outside and ventilation air. The amounts of air from the outside, supplied air, ventilation air and circulation air are controlled with the help of mass regulators in an automatic control system. The document shows how a heat pump is used but there is no storage of heat in the fluid filled intermediate storage tanks.

US5249430 A describes control of the state of the air in a closed room, such as a greenhouse and which comprises a brine reservoir.

JP2007218462 A describes a heat pump with heat storage.

EP0693660 A2 describes a ventilator/drier assembly for very damp rooms.

Furthermore, reference is made to WO 2013026588 A1 which relates to a mobile water heater device comprising a carrier frame, a housing provided on the carrier frame, a first fluid flow system where a first fluid can flow and a second fluid flow system in which water can flow. A heat exchanger is connected between the first fluid flow system and the second fluid flow system for heat exchange between the first fluid and the water. The first fluid flow system is comprising a first fluid duct connected between the heat exchanger, a fluid heating device, a first pumping device, a first fluid container and further back to the heat exchanger again. The second fluid flow system is comprising a second fluid duct connected between a circulation water inlet connector, a second pumping device, the heat exchanger and further to a water outlet connector.

EP0240441A2 relates to a three-function heat pump system which provides space heating, space cooling and hot water. The system permits hot water production all year long of the heating or cooling modes of the system. The system employs a large storage tank and a relatively smaller hot water tank. A heat exchanger within the hot water tank is sized sufficiently to permit the hot water heat exchanger to function as a system condenser, thereby permitting the refrigerant to bypass the large storage tank. The system is packaged in a compact unit in which the compressor of the system is located within an insulated container with the domestic hot water tank.

EP2597379A2 discloses an autonomous climate control unit. The unit is formed by a portable container inside of which there is a high efficiency geothermal heat pump installed, capable of transmitting the heat from the ground or air to be used both for heating and for sanitary hot water, connected to a sanitary hot water collecting deposit and to a climate control inertia deposit, with inlets / outlets for the supply of sanitary hot water and climate control water, respectively. The device comprises a water condensation heat exchanger connected to some geothermal wells with a geothermal probe to perform the thermal exchange with the ground, which is connected to a condensation battery connected to the heat pump. The air condensation battery is in turn associated with its respective groups of condensation air admission fans and condensation air exit fans, all of this with an electric panel and a control system that allows using the unit in two operational modes.

### Objects of the present invention

An object of the invention is to provide a mobile station (container) for heating of a building where energy is taken from the outside air with an air-water heat pump that exchanges to heat up water/glycol which is stored intermediately in tanks and which is further exchanged to a channel heat battery for heating of the air that enters into an air installation or to a water heat exchanger connected to a heating installation.

Furthermore, an object is to provide a release-free mobile heating station with ventilation channel spigots for the air supply and exhaust air channels that use the energy from the exhaust air and external air at the same time to the external part of the heat pump for optimal energy uptake and COP.

Furthermore, an object is to provide a release-free mobile heating station for the construction industry to stop the use of fossil energy for heating and drying of new and existing buildings.

An object is also to provide a mobile heating station for the heating of spaces that shall be heated and dried. The air that is treated can be filtered in the mobile heating station for a cleaner internal environment.

Furthermore, an object is to provide a heating station with control via dampeners for continuous fresh air/recirculated air to spaces that shall be heated to optimise the need for and use of energy, and which can be controlled automatically with temperature and moisture sensors in the space that shall be treated.

### Summary of the invention

The above mentioned objects are obtained with a mobile heating station according to claim 1.

Furthermore, the container can comprise a fresh-air dampener and one or more air circulation/return dampeners for the control of the air to said one or more air-water heat pumps.

Furthermore, said one or more water tanks can be filled with water mixed with monoethylene glycol-based industrial glycol for heat transfer in circulation systems, such as Termfluid MEG5^{™}.

Furthermore, the mobile heating station can be equipped with an automatic control system set up to be controlled by temperature and moisture sensors placed in the building that is to be heated.

The container can comprise one or more air filters for the cleaning of the air that circulates in the container and to the building.

The container is preferably a closed container built in steel or aluminium which is adapted to tolerate being loaded, transported, hoisted, and moved by a car, crane or truck.

The container can comprise said air supply fan set up to blow heated air out through the supply air outlet and to the building, and also one or more exhaust fans that collect hot air from the building for further distribution to the supply air fan or the external part of the one or more heat pumps.

### Description of the figures

Preferred embodiments of the invention shall be described in the following in more detail with reference to the enclosed figures, in which:

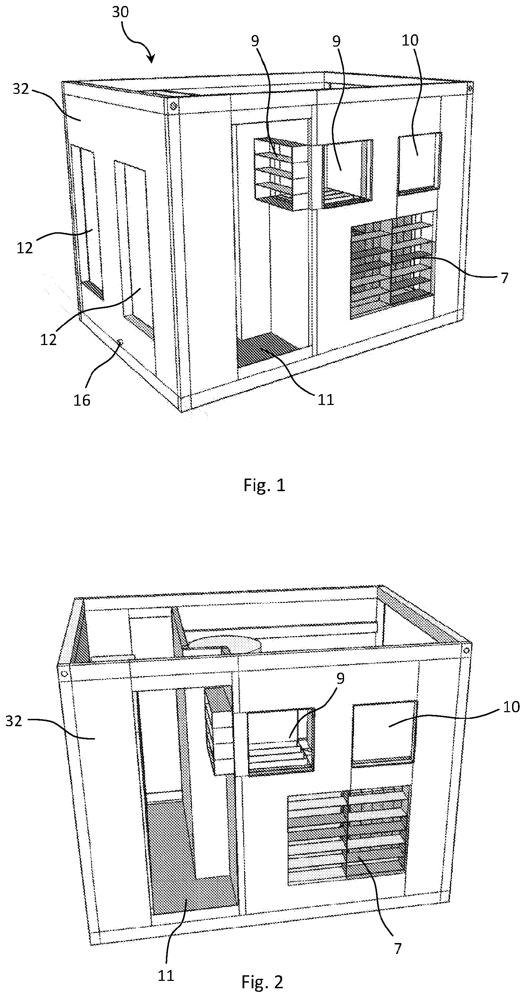

Figure 1 shows a perspective drawing of a mobile heating station according to the invention.
Figure 2 shows a perspective drawing of the mobile heating station according to the invention.

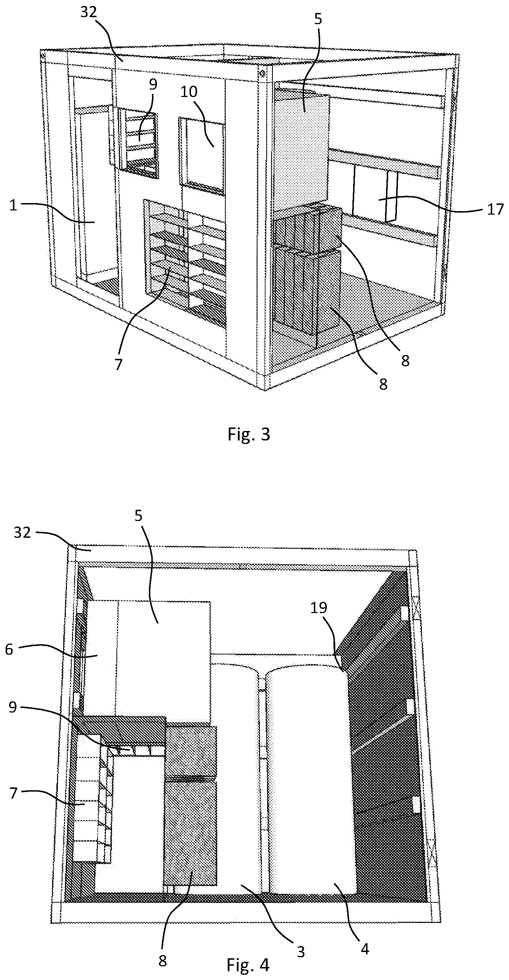

Figure 3 shows a perspective drawing of the mobile heating station according to the invention.
Figure 4 shows a perspective drawing of the mobile heating station according to the invention.
Figure 5 shows the mobile heating station according to the invention seen from above.
Figure 6 shows a perspective drawing of the mobile heating station according to the invention.
Figure 7 shows a schematic diagram of components in the mobile heating station according to the invention.

### Description of preferred embodiments of the invention

The mobile heating station 30 according to the invention can be built as a closed container 32 in steel or aluminium, in a reinforced construction and adapted for fastening of heat pumps, water tanks and equipment that tolerates up-loading, being transported, being hoisted up, and moved by a car, crane or a truck.

The mobile heating station can be built in a version for heating of ventilation air to a building in connection with heating and drying of the building, and in a second version for the heating of the water/glycol mixture to a heating station/district heating source. Alternatively, both versions can be integrated into the mobile heating station 30 and be controlled with respect to the desired function.

Firstly, the hot air function of heating and drying of a building shall be described. The mobile heating station 30 comprises a container 32 equipped with one or more air-water heat pumps1,2 that utilise external air and exhaust air from the building to take up energy and which heats a cooling medium for exchange to a water-glycol mixture that is stored in one or more water tanks 3,4. In the water tanks 3,4 water can be mixed with monoethylene glycol-based industrial glycol for heat transfer in circulation systems, such as Termfluid MEG5^{™}, so that it does not freeze down to -20 °C by the storing in the heat station 30, and in use when it is freezing.

The heat pump(s) 1,2 heat the water-glycol mixture in the water tanks 3,4 and a pump 20b pumps water-glycol in a conduit circuit 21 to a shunt valve 20a, in a control unit 20 that has a connection to a water thermal battery 6 in a ventilation channel internally in the heating station 30, and which in turn is connected to a ventilation channel in the building to lead dry, hot air, with the help of an air supply fan 5a, to areas in the building that shall be heated/dried.

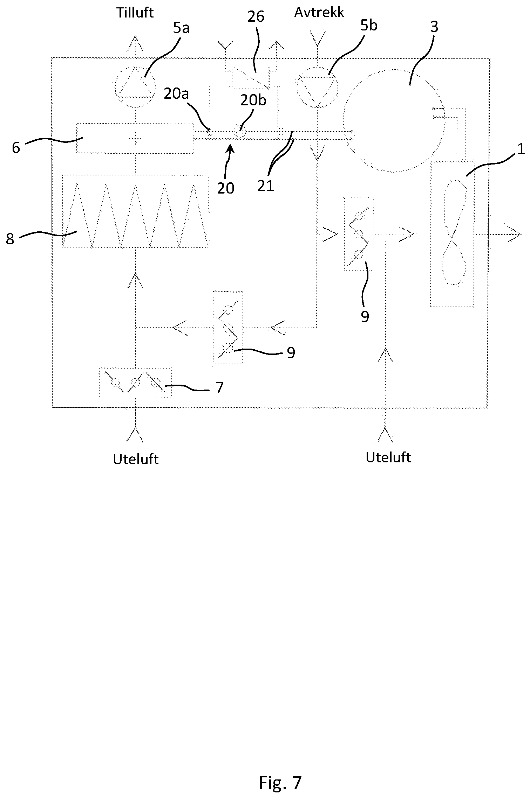

The control unit 20, with the shunt valve 20a and pump 20b, is shown in more detail in figure 7. The shunt valve 20a will be able to exchange between the heat exchanger 26 air-water and water-water. Furthermore, there can be an exchange between water/water-glycol from the tanks 3,4 in the internal circuit.

Air is brought from the outside air and recirculated air (returned air from areas that are heated) can be adjusted according to need using a fresh-air dampener 7 and one or more recirculation dampeners/return dampeners 9 from 0-100% fresh air/recirculated air. Temperature, with heating supply to the shunt valve 20a, thermal battery 6 and the dampeners 7,9 for fresh air/recirculated air can be regulated by the control system. The installation can be controlled based on a timer, or according to need with moisture and temperature sensors in the areas that shall be heated/dried for optimal operation and saving of energy.

Hot air is moved by an air supply fan 5a into the areas that shall be heated/dried and returned air from the areas is coupled to the heating station 30 to be used for recirculated air or be discarded.

The air supply fan 5a and the exhaust fan 5b can be adjusted with individual rpm/speed/amount of air independent of each other to compensate for channel resistance and the amount of air needed in the supply air and exhaust.

To regulate the moisture two individual set points relating to the fan speed can be used for both the supplied air and exhaust fan. At a moisture above the set point the fans 5a,5b can be adjusted to a rpm/set point (for example with an increased amount of air) of the supply air and exhaust fan and when the desired or lower moisture is reached, the set point of the fans can be reset to a different (for example a decreased amount of air) rpm/set point.

The regulation of the temperature can be carried out by choosing between supplied air regulation, i.e. at a set temperature on the air supply, independent of other temperatures or exhaust regulation with a desired exhaust temperature with maximum-minimum supply air temperature set points that can be adjusted. For example, if 15 °C is wanted in the exhaust, the supply air can be adjusted to, for example, between 12 °C and 30 °C to get 15 °C in the exhaust. However, all temperatures are adjusted individually.

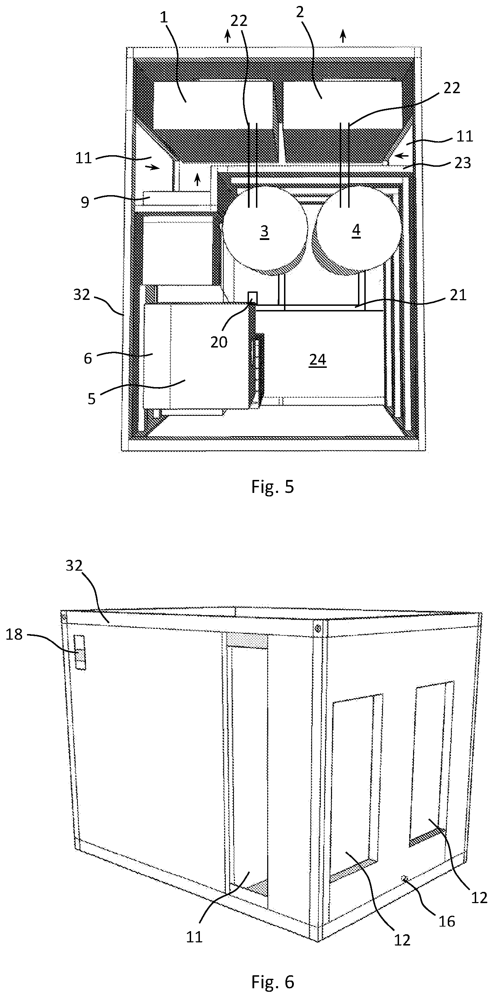

In particular, figures 5 and 7 show the layout of the components in the container 32. In the specific and shown embodiment the air-water heat pumps1,2 are placed at one end of the container 32 that is connected to the water tanks 3,4 for the heating of the water-glycol mixture. The conduit circuit 21 connects the water tanks 3,4 with the thermal battery 6 or to an external heat exchanger, where the control is carried out with a shunt valve 20a and the pump 20b. The supply air fan 5a is placed adjoining the thermal battery 6 and blows heated air out through the supply air line 10 and further in the supply air channel (not shown) to the building that shall be heated or dried.

In addition to the supply air fan 5a which ensures that the heated air is blown out through the supply outlet 10, the container 32 also comprises one or more exhaust fans 5b in connection to the shown air recirculation dampener/return air dampener 9 that collects warm air from the building. The exhaust fan 5b transports air internally in the container 32 to the supply air fan 5a or to the outside part of the heat pumps1,2, with regard to the control by the dampener of fresh air/recirculated air and the dampener for the external air.

In the second embodiment the mobile heating station 30 is set up for heating of hot water and is constructed as described previously and shown. The mobile heating station with air-water heat pumps 1,2 uses external air to take up energy that heats the cooling medium for exchange to water-glycol that is stored in water tanks 3,4. In the water tanks 3,4 water can be mixed with Termfluid MEG5^{™} to avoid freezing, all the way down to -20 °C, by storing in the heating station and in use when it is freezing.

The heat pump 1,2 heats water/glycol in the water tanks 3,4 and the pump 20b pumps water-glycol in the conduit circuit 21 to the shunt valve 20a that supplies the heat exchanger to heat up a water circuit which is connected to an exchanger that is external to the heating station 30, for example from a distant heating installation or other water heating installation water or water/glycol.

The energy is taken from the outside air, which is heated by the cooling medium in the air-water heat pump 1,2 that exchanges to heat up the water/glycol in the water tanks 3,4, which is further exchanged according to need to the thermal battery air/water for heating of the air or to a water heat exchanger for the heating of water heat (district heating, etc.).

With the invention, one achieves a smart CO₂-free heating station which is mobile, and which can start to produce energy from air to air or water by simply being connected to the electricity grid and starting the station. The system will be able to start and operate with the external temperature from -20 °C to +35 °C. The automatic regulation with the control as needed fresh air/recirculation air function, temperature and moisture sensors for optimal and control as needed of the heating and drying process and minimal use of energy.

The COP (coefficient of performance) of a heating station can, for example, be 4.1 for heat pumps at 7 °C outside and gradually lower down to 2.85 at -15 °C, this is the case for both versions.

Smart CO₂-free heating stations as described can be supplied with performances from 9kW to 180 kW with an alternative number of heat pumps.

### Components

- 1.: Heat pump 1 external part
- 2.: Heat pump 2 external part
- 3.: Water/glycol tank
- 4.: Water/glycol tank
- 5.: Ventilation fans, supply air fan 5a and exhaust fan 5b
- 6.: Water/glycol thermal battery air
- 7.: Fresh-air dampener
- 8.: Air filter
- 9.: Recirculated air dampener/returned air dampener
- 10.: Supply air heated to the ventilation channel
- 11.: Air inlet external air to heat pumps and supply air
- 12.: Waste external air after uptake of energy in the heat pumps
- 13.: Chanel spigot recirculated air/returned air
- 14.: Channel spigot supply air to heating
- 16.: Drainage of condensed water (in the draining a heating cable may be used to avoid ice when it is freezing)
- 17.: Automation cupboard placing
- 18.: Connection of electricity
- 19.: Water/glycol filling
- 20.: Control station with shunt valve 20a and pump 20b
- 21.: Water/glycol pipe
- 22.: Cooling pipe
- 23.: Dividing wall
- 24.: Mixing room air, external air and exhaust air before filtration in a filter.
- 26.: Heat exchanger
- 32.: Container, impenetrable in use, only openings that are shown in drawings with air in and out

## Claims

1. Mobile heating station (30), comprising a container (32) equipped with one or more air-water heat pumps (1,2) and one or more water tanks (3,4),
the one or more air-water heat pumps (1,2) are arranged to collect energy from external air and/or recirculated air and to exchange for heating of a water-glycol mixture to said one or more water tanks (3,4), for intermediate storage of thermal energy,
the mobile heating station further comprising a conduit circuit (21), a supply air channel for a building and a water-glycol thermal battery (6) in said supply air channel internally in the heating station (30) for heating of air that shall be supplied to the building via said supply air channel,
wherein, in use, the heated water-glycol mixture from said one or more water tanks (3,4) is circulated in said conduit circuit (21) to exchange thermal energy further to said water-glycol thermal battery (6),
the conduit circuit (21) comprising the water-glycol thermal battery (6) and a control station (20) comprising a pump (20b) and a shunt valve (20a) arranged for flow control of the heated water-glycol mixture from the one or more water tanks (3,4) to the water-glycol thermal battery (6), and
the mobile heating station further comprising a supply air fan (5), and a supply air outlet (10), and
the water-glycol thermal battery (6) is arranged in air flow communication with said supply air fan (5) which is arranged for blowing heated air through said supply air outlet (10) and to the building via said supply air channel.

2. Mobile heating station (30) according to claim 1, wherein the container (32) comprises a fresh-air dampener (7) and one or more recirculated air/return dampeners (9) for control of the air to said one or more air-water heat pumps (1,2).

3. Mobile heating station (30) according to claim 1, wherein said one or more water tanks (3,4) are filled with water mixed with monoethylene glycol-based industrial glycol for the transfer of heat in circulation systems.

4. Mobile heating station (30) according to claim 1, wherein the mobile heating station (30) is equipped with an automatic control system (17) controllable by temperature and moisture sensors placed in the building that is to be heated.

5. Mobile heating station (30) according to claim 1, wherein the container (32) comprises one or more air filters (8) for cleaning of the air that circulates in the container (32) and to the building.

6. Mobile heating station (30) according to claim 1, wherein the container (32) is a closed container built in steel or aluminium and adapted to tolerate being uploaded, transported, hoisted up and moved by car, crane or truck.

7. Mobile heating station (30) according to claim 1, wherein the container (32) comprises said supply air fan (5a) blowing heated air out through the supply air outlet (10) to the building, and also one or more exhaust fans (5b) collecting warm air from the building for further transport to the supply air fan (5a) or to an external part of the one or more heat pumps (1,2).

## Patentansprüche

1. Mobile Heizstation (30), umfassend einen Behälter (32), der mit einer oder mehreren Luft-Wasser-Heizpumpen (1, 2) und einem oder mehreren Wassertanks (3, 4) ausgestattet ist,
wobei die eine oder mehreren Luft-Wasser-Heizpumpen (1, 2) dazu angeordnet sind, Energie aus Außenluft und/oder umgewälzter Luft zu sammeln und zum Erhitzen eines Wasser-Glykol-Gemischs an den einen oder die mehreren Wassertanks (3, 4) zur Zwischenspeicherung von Wärmeenergie auszutauschen,
wobei die mobile Heizstation ferner einen Leitungskreislauf (21), einen Zuluftkanal für ein Gebäude und eine Wasser-Glykol-Wärmebatterie (6) in dem Zuluftkanal intern in der Heizstation (30) zum Erhitzen von Luft, die dem Gebäude über den Zuluftkanal zugeführt werden soll, umfasst,
wobei in Verwendung das erhitzte Wasser-Glykol-Gemisch aus dem einen oder den mehreren Wassertanks (3, 4) in dem Leitungskreislauf (21) zirkuliert wird, um Wärmeenergie weiter an die Wasser-Glykol-Wärmebatterie (6) auszutauschen,
wobei der Leitungskreislauf (21) die Wasser-Glykol-Wärmebatterie (6) und eine Steuerstation (20) umfassend eine Pumpe (20b) und ein Shuntventil (20a) umfasst, die zur Flusssteuerung des erhitzten Wasser-Glykol-Gemischs von dem einen oder den mehreren Wassertanks (3, 4) zu der Wasser-Glykol-Wärmebatterie (6) angeordnet sind, und
wobei die mobile Heizstation ferner ein Zuluftgebläse (5) und einen Zuluftauslass (10) umfasst, und
wobei die Wasser-Glykol-Wärmebatterie (6) in Luftflusskommunikation mit dem Zuluftgebläse (5) angeordnet ist, das zum Blasen von erhitzter Luft durch den Zuluftauslass (10) und zu dem Gebäude über den Zuluftkanal angeordnet ist.

2. Mobile Heizstation (30) nach Anspruch 1, wobei der Behälter (32) einen Frischluftdämpfer (7) und einen oder mehrere Umwälzluft-/Rückdämpfer (9) zur Steuerung der Luft zu der einen oder den mehreren Luft-Wasser-Heizpumpen (1, 2) umfasst.

3. Mobile Heizstation (30) nach Anspruch 1, wobei der eine oder die mehreren Wassertanks (3, 4) mit Wasser gemischt mit industriellem Glykol auf Monoethylenglykolbasis für die Übertragung von Hitze in Zirkulationssystemen gefüllt sind.

4. Mobile Heizstation (30) nach Anspruch 1, wobei die mobile Heizstation (30) mit einem automatischen Steuersystem (17) ausgestattet ist, das durch Temperatur- und Feuchtigkeitssensoren, die in dem Gebäude, das zu erhitzen ist, platziert sind, steuerbar ist.

5. Mobile Heizstation (30) nach Anspruch 1, wobei der Behälter (32) einen oder mehrere Luftfilter (8) zum Reinigen der Luft, die in dem Behälter (32) und zu dem Gebäude zirkuliert, umfasst.

6. Mobile Heizstation (30) nach Anspruch 1, wobei der Behälter (32) ein geschlossener Behälter ist, der aus Stahl oder Aluminium gebaut und dazu ausgelegt ist, zu tolerieren, durch Auto, Kran oder Lastwagen verladen, transportiert, hochgehoben und bewegt zu werden.

7. Mobile Heizstation (30) nach Anspruch 1, wobei der Behälter (32) das Zuluftgebläse (5a), das erhitzte Luft durch den Zuluftauslass (10) zu dem Gebäude ausbläst, und auch ein oder mehrere Abluftgebläse (5b), die warme Luft aus dem Gebäude für weiteren Transport zu dem Zuluftgebläse (5a) oder zu einem externen Teil der einen oder der mehreren Heizpumpen (1,2) sammeln, umfasst.

## Revendications

1. Centrale de chauffage mobile (30), comprenant un conteneur (32) équipé d'une ou plusieurs pompes à chaleur air-eau (1, 2) et d'un ou plusieurs réservoirs d'eau (3, 4),
la ou les pompes à chaleur air-eau (1, 2) sont agencées pour collecter de l'énergie à partir de l'air extérieur et/ou d'air recyclé et pour échanger en vue du chauffage d'un mélange eau-glycol dans ledit ou lesdits réservoirs d'eau (3, 4), pour un stockage intermédiaire d'énergie thermique,
la centrale de chauffage mobile comprenant en outre un circuit de conduits (21), un canal d'air d'alimentation pour un bâtiment et une batterie thermique eau-glycol (6) dans ledit canal d'air d'alimentation à l'intérieur de la centrale de chauffage (30) pour chauffer l'air qui doit être fourni au bâtiment par l'intermédiaire dudit canal d'air d'alimentation,
lors de l'utilisation, ledit mélange eau-glycol chauffé provenant dudit ou desdits réservoirs d'eau (3, 4) étant mis en circulation dans ledit circuit de conduits (21) pour échanger de l'énergie thermique en outre avec ladite batterie thermique eau-glycol (6),
ledit circuit de conduits (21) comprenant la batterie thermique eau-glycol (6) et une centrale de régulation (20) comprenant une pompe (20b) et une vanne de dérivation (20a) agencées pour réguler le débit du mélange eau-glycol chauffé provenant du ou des réservoirs d'eau (3, 4) vers la batterie thermique eau-glycol (6), et
ladite centrale de chauffage mobile comprenant en outre un ventilateur d'air d'alimentation (5) et une sortie d'air d'alimentation (10), et
ladite batterie thermique eau-glycol (6) étant agencée en communication d'écoulement d'air avec ledit ventilateur d'air d'alimentation (5) qui est agencé pour souffler de l'air chauffé à travers ladite sortie d'air d'alimentation (10) et vers le bâtiment par l'intermédiaire dudit canal d'air d'alimentation.

2. Centrale de chauffage mobile (30) selon la revendication 1, ledit conteneur (32) comprenant un humidificateur d'air frais (7) et un ou plusieurs humidificateurs d'air recyclé/de retour (9) pour réguler l'air dans ladite ou lesdites pompes à chaleur air-eau (1, 2).

3. Centrale de chauffage mobile (30) selon la revendication 1, ledit ou lesdits réservoirs d'eau (3, 4) étant remplis d'eau mélangée à du glycol industriel à base de monoéthylène glycol pour le transfert de chaleur dans des systèmes de circulation.

4. Centrale de chauffage mobile (30) selon la revendication 1, ladite centrale de chauffage mobile (30) étant équipée d'un système de régulation automatique (17) pouvant être régulé par des capteurs de température et d'humidité placés dans le bâtiment à chauffer.

5. Centrale de chauffage mobile (30) selon la revendication 1, ledit conteneur (32) comprenant un ou plusieurs filtres à air (8) destinés à nettoyer l'air qui circule dans le conteneur (32) et dans le bâtiment.

6. Centrale de chauffage mobile (30) selon la revendication 1, ledit conteneur (32) étant un conteneur fermé construit en acier ou en aluminium et adapté pour tolérer d'être chargé, transporté, hissé et déplacé par une voiture, une grue ou un camion.

7. Centrale de chauffage mobile (30) selon la revendication 1, ledit conteneur (32) comprenant ledit ventilateur d'air d'alimentation (5a) soufflant de l'air chauffé à travers la sortie d'air d'alimentation (10) vers le bâtiment, et également un ou plusieurs ventilateurs d'évacuation (5b) collectant l'air chaud du bâtiment pour un transport ultérieur vers le ventilateur d'air d'alimentation (5a) ou vers une partie externe de la ou des pompes à chaleur (1, 2).
